Europäisches Patentamt

European Patent Office

Office européen des brevets

(19)

(11) Numéro de publication: **0 056 914**

**B1**

(12) **FASCICULE DE BREVET EUROPEEN**

(45) Date de publication du fascicule du brevet: **13.02.85**

(51) Int. Cl.⁴: **G 01 M 15/00**

(21) Numéro de dépôt: **81401622.6**

(22) Date de dépôt: **15.10.81**

(54) **Procédé et dispositif de récupération d'énergie, sous forme électrique, pour banc d'essai de moteurs.**

(30) Priorité: **30.12.80 FR 8027813**

(43) Date de publication de la demande:
**04.08.82 Bulletin 82/31**

(45) Mention de la délivrance du brevet:
**13.02.85 Bulletin 85/07**

(84) Etats contractants désignés:
**AT BE CH DE GB IT LI LU NL SE**

(56) Documents cités:
**FR-A-2 413 651**
**GB-A-1 032 497**
**US-A-2 440 076**
**US-A-3 456 498**

(73) Titulaire: **Appareillages et Matériels de
Servitudes (A M S) Société anonyme
12, Rue de Chevilly La Cerisaie 108
F-94262 Fresnes Cedex (FR)**

(72) Inventeur: **Tourneur, Aubert
5 rue Gismondi
F-77340 Pontault Combault (FR)**

(74) Mandataire: **Chambon, Gérard et al
Cabinet Chambon 6 et 8 avenue Salvador
Allende
F-93804 Epinay-sur-Seine Cédex (FR)**

Courier Press, Leamington Spa, England.

EP 0 056 914 B1

## Description

L'invention concerne un procédé et un dispositif de récupération d'énergie sous forme électrique, pour banc d'essai de moteurs et plus particulièrement de moteurs thermiques de véhicules.

Il est nécessaire, pour les moteurs thermiques, d'effectuer des mesures et des essais de fonctionnement et/ou d'endurance.

Ces essais, pour être représentatifs des conditions d'utilisation, doivent être réalisés à vitesse et couple variables, le couple de freinage étant généralement obtenu au moyen d'un frein à friction, d'un frein à eau ''Froude'' ou d'un frein électromagnétique à courants de Foucault.

L'énergie fournie par les moteurs ainsi essayés, qui correspond, au rendement près des moteurs, à l'énergie dépensée, est, en général, évacuée par un circulation d'eau de refroidissement dans le frein et la plupart du temps perdue.

C'est ainsi qu'une énergie considérable est gaspillée et c'est pourquoi on a recherché à récupérer au moins une partie de cette énergie.

Toutefois, il est particulièrement difficile, pour des raisons évidentes, de réutiliser sur place l'énergie récupérée, par exemple sous forme de chaleur, et, il est apparu qu'une manière particulièrement intéressante de récupérer cette énergie consistait à la transformer en énergie électrique de manière à pouvoir la réinjecter directement sur le réseau électrique de l'entreprise.

Il existe à l'heure actuelle un certain nombre de techniques dont le but est de transformer la puissance mécanique d'un moteur à vitesse variable, en puissance électrique de fréquence fixe.

Parmi les techniques connues, on peut citer les dispositifs hydrauliques et les variateurs de vitesse mécanique destinés à faire tourner une génératrice asynchrone branchée sur le réseau.

Il existe aussi des dispositifs entièrement électriques tels que le système Ward Leonard ou d'autres munis, par exemple, d'une génératrice et d'un onduleur, ou bien d'un alternateur, d'un redresseur et d'un onduleur, ou encore d'un moteur asynchrone ou synchrone, d'un redresseur et d'un onduleur.

Toutefois, un système du type Ward Leonard est un système coûteux comportant deux machines à courant continu dont la maintenance est difficile et qui sont reliées à une génératrice asynchrone branchée sur le réseau. Les dispositifs précités munis d'onduleurs généralement à thyristors, présentent de fortes harmoniques qui perturbent le réseau sur lequel le courant est réinjecté.

C'est pourquoi l'invention propose un dispositif et un procédé de récupération d'énergie, sous forme électrique, pour banc d'essai de moteurs comprenant notamment un frein accouplé au moteur en essai, une machine électrique asynchrone branchée au réseau de distribution, un capteur de vitesse aménagé en sortie du moteur et un capteur de couple, et qui présente, entre autres, les avantages suivants:

— courant récupéré sinusoïdal, pratiquement
— sans harmonique et en synchronisme avec le réseau électrique, donc sans perturbation pour les équipements particulièrement sensibles, tels que les ensembles électroniques;
— insensibilité aux vibrations du moteur en essai;
— dispositif réversible pour le démarrage ou le rodage par exemple, la machine asynchrone entraînant alors le moteur en essai;
— le génie civil est peu important;
— l'entretien est réduit au maximum et correspond à l'entretien d'un moteur triphasé (pas de collecteur);
— avantages possibles auprès des agences d'économie d'énergie;
— circuit de refroidissement en eau moins important.

Pour atteindre ces buts, le dispositif selon l'invention est remarquable en ce qu'il comporte un coupleur variateur de vitesse électromagnétique destiné à réaliser un accouplement entre le frein et la machine asynchrone, tandis, qu'un dispositif électronique de commande et d'asservissement dénommé ci-après asservisseur est prévu pour recevoir les signaux des capteurs de vitesse et de couple afin d'assurer l'asservissement en vitesse et/ou en couple et commander la mise en fonction ou hors fonction du frein et/ou du coupleur.

Selon un mode préféré, l'asservisseur est aménagé pour commander simultanément à certaines vitesses prédéterminées, d'une part l'arrêt progressif de l'action du frein ou respectivement du coupleur et, d'autre part, la mise en fonction progressive du coupleur ou respectivement du frein, le tout de manière telle que le couple, vu du moteur, reste pratiquement constant.

Avec un dispositif de ce type, muni d'une machine asynchrone à une seule vitesse de synchronisme Vs, l'invention propose un procédé de récupération d'énergie remarquable en ce qu'il consiste:

a) à charger le moteur en essai uniquement sur le frein au moyen de l'asservisseur lorsque la vitesse de sortie dudit moteur est inférieure à la vitesse de synchronisme Vs;

b) à faire démarrer la machine asynchrone dès le début de l'essai ou à partir d'une vitesse $V_1$ légèrement inférieure à la vitesse de synchronisme Vs, la machine asynchrone fonctionnant alors en moteur;

c) à commander simultanément, d'une part l'arrêt progressif de l'action du frein, et d'autre part la mise en fonction du coupleur, à partir de la vitesse de synchronisme Vs et jusqu'à une vitesse $V_2$, supérieure à la vitesse de syn-

**0 056 914**

chronisme Vs, à partir de laquelle seul le coupleur est en fonction, de sorte qu'à partir de la vitesse de synchronisme Vs la machine asynchrone fonctionne en génératrice et fournit de l'énergie au réseau;

d) à accomplir les opérations inverses au cours d'une décroissance de la vitesse du moteur;

Durant l'essai toutes les mesures désirées sont bien sûr effectuées.

Toutefois, selon un mode de réalisation avantageux du dispositif, la machine asynchrone est munie d'au moins deux vitesses de synchronisme $Vs_1$ et $Vs_2$, une commande de commutation étant prévue pour passer de l'une à l'autre.

Avec un dispositif de ce type, le procédé de récupération est remarquable en ce qu'il consiste:

a) à charger le moteur en essai uniquement sur le frein au moyen de l'asservisseur lorsque la vitesse de sortie dudit moteur est inférieure à la première vitesse de synchronisme $Vs_1$;

b) à faire démarrer la machine asynchrone connectée sur sa première vitesse de synchronisme $Vs_1$ dès le début de l'essai ou à partir d'une vitesse $V_1$ lègèrement inférieure à la première vitesse de synchronisme Vs1, la machine asynchrone fonctionnant alors en moteur;

c) à commander simultanément, d'une part l'arrêt progressif de l'action du frein, et d'autre part la mise en fonction du coupleur, à partir de la première vitesse de synchronisme Vs1 et jusqu'à une vitesse V2, supérieure à la première vitesse de synchronisme Vs1, à partir de laquelle seul le coupleur est en fonction, de sorte qu'à partir de la première vitesse de synchronisme Vs1 la machine asynchrone fonctionne en génératrice et fournit de l'énergie au réseau:

d) à commander simultanément, d'une part l'arrêt progressif de l'action du coupleur et, d'autre part la mise en fonction du frein, à partir d'une vitesse $V_3$ du moteur, inférieure à la deuxième vitesse de synchronisme $Vs_2$ et jusqu'à une vitesse $V_4$ inférieure ou sensiblement égale à la deuxième vitesse de synchronisme Vs2 mais supérieure à la vitesse V3 et à partir de laquelle seul le frein est en fonction;

e) à commuter la machine asynchrone sur sa deuxième vitesse de synchronisme $Vs_2$ entre ladite vitesse V4 et une vitesse V5, cette dernière étant supérieure ou sensiblement égale à la deuxième vitesse de synchronisme Vs2, le frein étant alors seul en fonction;

f) à commander simultanément, d'une part l'arrêt progressif de l'action du frein et, d'autre part la mise en fonction du coupleur à partir de la vitesse $V_5$ et jusqu'à une vitesse $V_6$, supérieure à la vitesse V5, à partir de laquelle seul le coupleur est en fonction, de sorte que la machine asynchrone fonctionne en génératrice à la deuxième vitesse de synchronisme Vs2 et fournit de l'énergie au réseau;

g) à recommencer éventuellement les opérations à partir de d) pour d'autres vitesses supérieures de synchronisme;

h) à accomplir les opérations inverses au cours d'une décroissance de la vitesse du moteur.

De préférence, le coupleur électromagnétique et/ou le frein, sont à courants de Foucault, et sont commandés chacun en faisent varier leur courant d'excitation.

En outre et de préférence, un dispositif de contrôle de la puissance du réseau est prévu pour mesurer la puissance possible de récupération et agir en conséquence sur l'asservisseur de l'ensemble frein-coupleur, de manière à laisser éventuellement en fonction soit le frein seul, soit le coupleur et la génératrice, soit le frein le coupleur et la génératrice, selon la puissance possible à retourner au réseau.

Dans ce cas, les procédés mentionnés ci-avant sont en outre remarquables en ce qu'ils consistent à laisser également le frein en fonction en même temps que le coupleur lorsque le réseau ne peut admettre une récupération maximale du dispositif et à interdire toute mise en fonction du coupleur lorsqu'aucune puissance ne peut être récupérée.

L'invention sera mieux comprise à la lecture de la description qui va suivre en référence au dessin annexé dans lequel:

— la figure 1 représente schématiquement un banc d'essai muni d'un dispositif selon l'invention,
— la figure 2 est une diagramme simplifié de la courbe de récupération d'énergie obtenue avec le dispositif selon la figure 1.
— la figure 3 est une diagramme du couple d'une machine asynchrone en fonction de la vitesse.

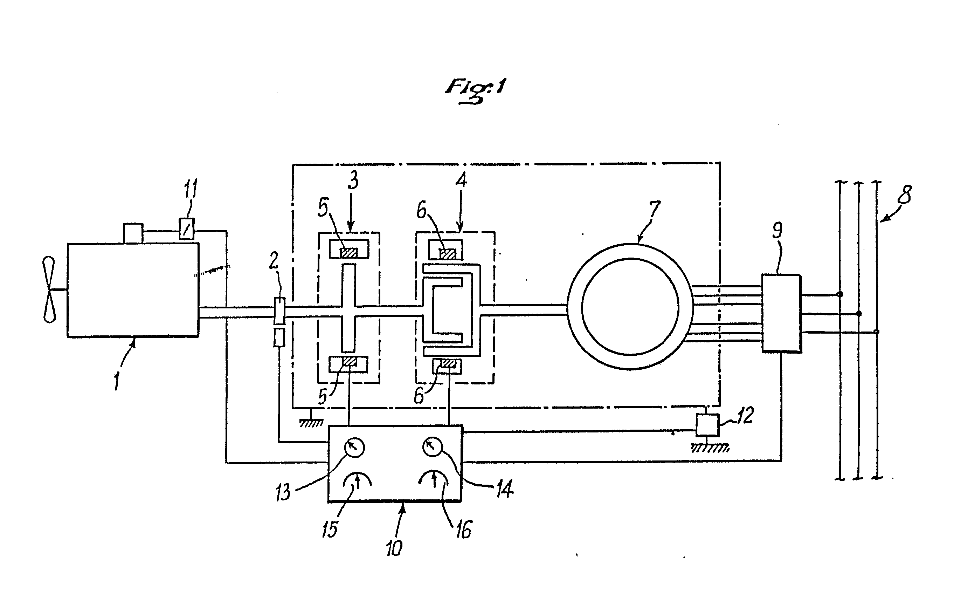

La figure 1 montre un moteur thermique 1 en essai muni en sortie d'arbre d'un capteur de vitesse 2 et qui est accouplé à un ensemble frein/coupleur (3, 4). Le frein 3 et le coupleur 4 sont de préférence électromagnétiques à courants de Foucault et sont donc munis de bobines d'excitation respectivement 5 et 6.

Le coupleur 4 est accouplé en sortie à une machine asynchrone 7 à deux vitesses de synchronisme $(Vs_1)$ et $(Vs_2)$.

La machine asynchrone 7 est branchée au réseau 8 de distribution de l'entreprise au moyen d'une armoire de commutation ou de contacteurs 9 qui permet en outre le passage de l'une des vitesses de synchronisme à l'autre.

Il est, en outre, prévu un dispositif électronique de commande et d'asservissement ou asservisseur 10 connecté aux bobines d'excitation 5 et 6 du frein et du coupleur, à l'armoire de contacteurs 9, au capteur de vitesse 2, à une commande d'accélérateur 11 du moteur et à un capteur de couple, schématisé en 12.

Afin d'effectuer les différentes mesures voulues, l'asservisseur 10 est notamment pourvu de deux réglages manuels 13 et 14 de consignes respectivement de vitesse et de couple. Il est également muni d'un commutateur 15 manuel-automatique et d'une commande 16 de fonctionnement en régulation de vitesse ou de couple.

Il est ainsi possible, en manuel, d'effectuer les mesures en affichant les consignes voulues. En régulation automatique de vitesse, la consigne de vitesse assure un asservissement qui commande la charge c'est-à-dire l'excitation frein/coupleur tandis qu'une consigne de couple assure un contrôle de la commande d'accélérateur 11.

Au contraire, en régulation de couple, la consigne de vitesse assure un contrôle de la commande d'accélérateur et une consigne de couple commande l'excitation frein/coupleur (en jouant alors sur la charge).

Comme dans tous les bancs d'essai, il est donc possible d'assurer toutes les mesures, à puissance maximum ou non, en régulation de couple (c'est-à-dire à vitesse variable) ou en régulation de vitesse (c'est-à-dire à couple variable).

Pour bien comprendre le fonctionnement du dispositif, il est bon de rappeler les caractéristiques connues suivantes:

Le coupleur électromagnétique ne cause pas de perte de couple.

Le couple du coupleur est sensiblement proportionnel à son courant d'excitation.

Le couple maximum de la machine asynchrone à sa vitesse de synchronisme est choisi pour être au moins aussi grand que le couple maximum du moteur thermique.

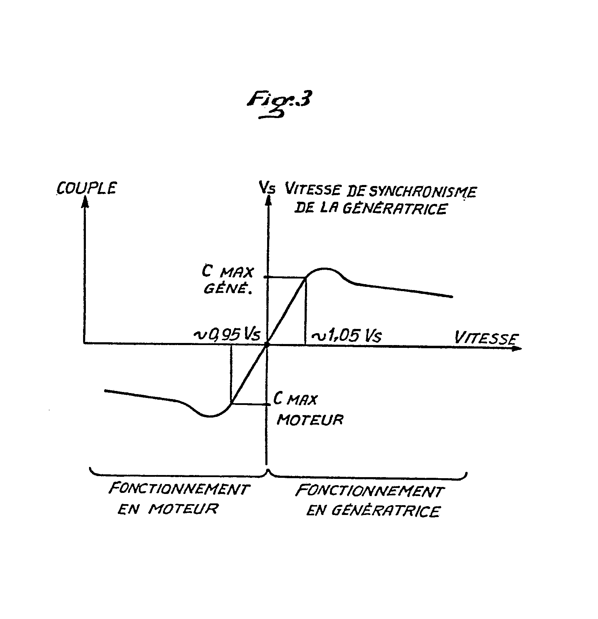

La courbe du couple d'une machine asynchrone en fonction de sa vitesse, est sensiblement linéaire au voisinage de la vitesse de synchronisme (voir figure 3).

La machine asynchrone fonctionne en moteur (consommation d'énergie) en-dessous de sa vitesse de synchronisme et en génératrice (récupération d'énergie) au-dessus de sa vitesse de synchronisme (voir figure 3).

La puissance récupérée est sensiblement proportionnelle (au rendement près de la machine) au couple résistant de ladite machine, celle-ci étant maximum lorsque la vitesse du moteur thermique est sensiblement égale à celle de la génératrice.

L'exemple représenté comporte une machine asynchrone 7 munie de deux vitesses de synchronisme $(Vs_1)$ et $(Vs_2)$ mais il est clair que cell-ci pourrait n'en avoir qu'une ou au contraire plus de deux.

C'est une nouveauté dans la récupération d'énergie d'utiliser une machine à plusieurs vitesses, et les problèmes dus au passage de commutation de l'une à l'autre sont résolus par l'invention grâce au coupleur-frein utilisé comme il sera expliqué ci-après.

Les vitesses de synchronisme $(Vs_1)$ et $(Vs_2)$ dépendent évidemment de la fréquence du courant du réseau et du nombre de paires de poles de la machine.

L'exemple choisi montre une machine dont les vitesses $(Vs_1)$ et $(Vs_2)$ sont respectivement 1500 et 3000 trs/mn pour un réseau de 50 Hz.

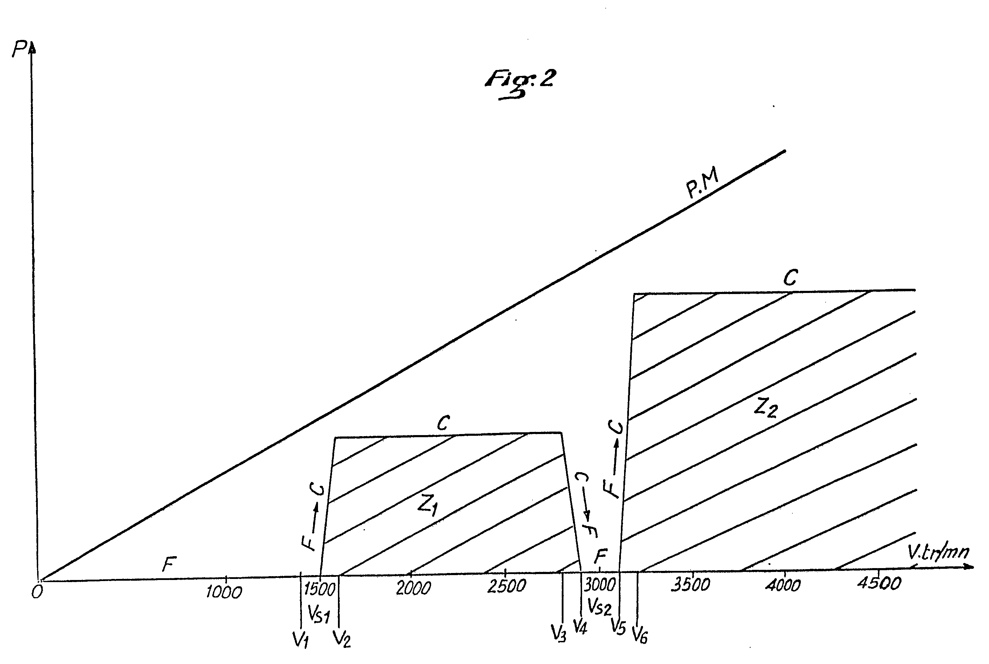

Le procédé de récupération est représenté à la figure 2 qui montre très schématiquement un diagramme de récupération de puissance.

La courbe (rectiligne) PM indique la puissance développée en bout d'arbre du moteur thermique en fonction de sa vitesse. Cette courbe est évidemment théorique pour simplifier le diagramme, en considérant en outre un couple de fonctionnement du moteur constant dans toute la plage de vitesses envisagée.

Au débit de l'essai, à partir d'une vitesse nulle et jusqu'à une vitesse sensiblement égale à $(Vs_1)$ la mise en charge du moteur thermique à couple pratiquement constant est obtenue uniquement par la mise en fonction du frein. Cette mise en fonction est contrôlée par l'asservisseur 10 qui permet d'exciter uniquement ledit frein lorsque la vitesse donnée par le capteur 2 est inférieure à $(Vs_1)$ c'est-à-dire à 1500 tours/minute.

Dès le début ou à une vitesse $(V_1)$ inférieure à $(Vs_1)$, la machine asynchrone 7 est connectée au réseau à sa première vitesse de synchronisme $(Vs_1)$. A partir de sa mise en fonction et jusqu'à la vitesse $(Vs_1)$ la machine 7 est consommatrice d'énergie (fonction moteur).

A partir de $(Vs_1)$ l'asservisseur électronique commande à la fois le frein et le coupleur en fonctions croisées (en excitant de plus en plus le coupleur et de moins en moins le frein), de telle sorte que le couple, vu du moteur, reste sensiblement constant (voir F→C sur figure 2).

De la vitesse $(V_2)$ supérieure à $(Vs_1)$ à la vitesse $(V_3)$ inférieure à $(Vs_2)$, le frein est complètement hors fonction et seul le coupleur est en fonction (partie C de la courbe), ledit coupleur servant alors de variateur de vitesse. La machine 7 qui fonctionne en génératrice à partir de $(Vs_1)$ récupère alors de l'énergie (zone hachurée Z1 figure 2).

Entre les vitesses $(V_3)$ et $(V_4)$ inférieures à $(Vs_2)$, le coupleur et le frein sont commandés d'une manière semblable à celle mentionnée ci-avant (partie C→F) mais en sens inverse, de telle sorte que le frein seul soit en fonction à partir de la vitesse $(V_4)$ et jusqu'à une vitesse $(V_5)$ supérieure à $(Vs_2)$.

Entre les vitesses $(V_4)$ et $(V_5)$ qui peuvent être sensiblement égales et très voisines de $(Vs_2)$ c'est-à-dire pendant la fonction frein uniquement, la machine 7 est commutée automatiquement à sa deuxième vitesse de synchronisme $(Vs_2)$, au moyen de l'asservisseur 10 et de l'armoire de contacteurs 9.

L'opération (F→C) effectuée entre $(Vs_1)$ et $(V_2)$ est de nouveau répétée entre $(V_5)$ et une

vitesse ($V_6$) de telle sorte qu'à partir de ($V_6$) seul le coupleur soit en action comme variateur de vitesse, la machine 7 récupérant alors de l'énergie à sa vitesse de synchronisme ($Vs_2$) (zone hachurée Z2 figure 2).

Le diagramme de la figure 2 montre que les courbes de récupération n'atteignent pas la courbe linéaire PM de puissance du moteur, ce qui est dû, bien sûr, au rendement des moyens utilisés.

Un tel dispositif ne permet pas de récupérer la totalité de l'énergie disponible en sortie d'arbre du moteur, la différence étant dissipée en calories dans le frein et le coupleur et au rendement près de la machine asynchrone uniquement dans le coupleur lorsque la vitesse est comprise entre ($V_2$) et ($V_3$) ou supérieure à ($V_6$).

En fonction des types d'essais des moteurs, la puissance moyenne récupérée varie à compter du tiers de la vitesse maximum du moteur thermique de 40 à 65%. Dans certains cas de fonctionnement, le rendement peut atteindre: 75 à 80%. Dans les zones Z1 et Z2 du diagramme, les puissances récupérées sont égales respectivement à

$$P_1 = \frac{1500 \times C}{716} \times K \quad \text{et} \quad P_2 = \frac{3000 \times C}{716} \times K$$

où la puissance P est exprimée en chevaux, C est le couple en m da N (mètre, deca Newton) et K un facteur tenant compte des rendements des moyens utilisés.

La puissance du moteur thermique (PM) est alors égale à la puissance récupérée plus la puissance dissipée en calories dans le frein et/ou le coupleur.

Il est bien évident que les moyens utilisés sont adaptés aux types d'essais désirés pour obtenir le meilleur rendement possible.

En outre, si l'exemple choisi montre une machine 7 asynchrone à deux vitesses de synchronisme, il est possible d'utiliser une machine à une seule vitesse ou encore à plus de deux vitesses, comme il a déjà été dit.

Quelque soit le nombre de vitesses de synchronisme (limité par la fréquence du réseau)), l'asservisseur électronique permet la commutation de l'une à l'autre sans problème de la manière décrite ci-avant par le passage en fonction frein uniquement.

Le processus de fonctionnement, lorsque la vitesse décroit, est évidemment en sens inverse de celui précédemment décrit.

Il est en outre possible de prévoi un contacteur qui permet de supprimer à volonté la commande d'excitation du coupleur, dans la mesure où il est déconseillé ou impossible de récupérer de l'énergie, par exemple lorsque les essais nécessitent des variations trop grandes ou trop rapides de vitesses.

Avantageusement, comme il a déjà été dit, un dispositif (non représenté) de contrôle de la puissance du réseau est prévu pour commander en conséquence l'asservissement frein-coupleur de manière à laisser éventuellement en fonction soit le frein seul, soit le coupleur et la génératrice, soit le frein le coupleur et la génératrice ensemble, selon la puissance de récupération admissible par le réseau.

De nombreuses variantes ou modifications peuvent évidemment être apportées, sans sortir du cadre de l'invention.

C'est ainsi, par exemple, que si le frein utilisé est avantageusement un frein électromagnétique, celui-ci pourrait être un frein du type à friction ou du type "Froude" à niveau d'eau, l'asservisseur électronique commandant alors des moyens propres à contrôler ce type de frein.

**Revendications**

1. Dispositif de récupération d'énergie, sous forme électrique, pour banc d'essai de moteurs, comprenant notamment un frein (3) accouplé au moteur (1) en essai, une machine électrique asynchrone (7) branchée au réseau de distribution (8), un capteur de vitesse (2) aménagé en sortie du moteur (1) et un capteur de couple (12), caractérisé en ce qu'il comporte un coupleur variateur de vitesse électromagnétique (4) destiné à réaliser un accouplement entre le frein (3) et la machine asynchrone (7) tandis qu'un asservisseur (10) est prévu pour recevoir les signaux des capteurs de vitesse (2) et de couple (12) afin d'assurer l'asservissement en vitesse et/ou en couple et de commander la mise en fonction ou hors fonction du frein et/ou du coupleur.

2. Dispositif de récupération selon la revendication 1, caractérisé en ce que l'asservisseur (10) est aménagé pour commander simultanément, à certaines vitesses prédéterminées, d'une part l'arrêt progressif de l'action du frein (3) ou respectivement du coupleur (4), et d'autre part la mise en fonction progressive du coupleur (4) ou respectivement du frein (3), le tout de manière telle que le couple vu du moteur (1) reste pratiquement constant.

3. Procédé de récupération d'énergie au cours d'essais dans un banc d'essai de moteurs et au moyen d'un dispositif selon la revendication 2 muni d'une machine asynchrone (7) à une seule vitesse de synchronisme Vs, caractérisé en ce qu'il consiste:

a) à charger le moteur (1) en essai uniquement sur le frein (3) au moyen de l'asservisseur (10) lorsque la vitesse de sortie dudit moteur (1) est inférieure à la vitesse de synchronisme Vs,

b) à faire démarrer la machine asynchrone (7) dès le début de l'essai ou à partir d'une vitesse $V_1$ légérement inférieure à la vitesse de synchronisme Vs, la machine asynchrone (7) fonctionnant alors en moteur,

c) à commander simultanément, d'une part l'arrêt progressif de l'action du frein (3), et d'autre part la mise en fonction du coupleur (4), à partir de la vitesse de synchronisme Vs et jusqu'à une vitesse $V_2$, supérieure à la vitesse de synchronisme Vs, à partir de laquelle seul le coupleur (4) est en fonction, de sorte qu'à partir de la vitesse de synchronisme Vs la machine asynchrone (7) fonctionne en génératrice et fournit de l'énergie au réseau,

d) à accomplir les opérations inverses au cours d'une décroissance de la vitesse du moteur (1).

4. Dispositif de récupération selon l'une des revendications 1 et 2, caractérisé en ce que la machine asynchrone (7) est munie d'au moins deux vitesses de synchronisme $Vs_1$ et $Vs_2$, une commande de commutation (9) étant prévue pour passer de l'une à l'autre.

5. Procédé de récupération d'énergie au cours d'essais dans un banc d'essai de moteurs et au moyen d'un dispositif selon l'ensemble des revendications 2 et 4, caractérisé en ce qu'il consiste:

a) à charger le moteur (1) en essai uniquement sur le frein (3) au moyen de l'asservisseur (10) lorsque la vitesse de sortie dudit moteur est inférieure à la première vitesse de synchronisme $Vs_1$,

b) a faire démarrer la machine asynchrone (7) connectée sur sa première vitesse de synchronisme $Vs_1$ dès le début de l'essai ou à partir d'une vitesse $V_1$ légèrement inférieure à la première vitesse de synchronisme $Vs_1$, la machine asynchrone (7) fonctionnant alors en moteur,

c) à commander simultanément, d'une part l'arrêt progressif de l'action du frein (3), et d'autre part la mise en fonction du coupleur (4), à partir de la première vitesse de synchronisme $Vs_1$ et jusqu'à une vitesse $V_2$, supérieure à la première vitesse de synchronisme $Vs_1$, à partir de laquelle seul le coupleur est en fonction, de sorte qu'à partir de la première vitesse de synchronisme $Vs_1$ la machine asynchrone (7) fonctionne en génératrice et fournit de l'énergie au réseau,

d) à commander simultanément, d'un part l'arrêt progressif de l'action du coupleur (4), et d'autre part la mise en fonction du frein (3), à partir d'une vitesse $V_3$ du moteur, inférieure à la deuxième vitesse de synchronisme $Vs_2$ et jusqu'à une vitesse $V_4$ inférieure ou sensiblement égale à la deuxième vitesse de synchronisme $Vs_2$ mais supérieure à la vitesse $V_3$ et à partir de laquelle seul le frein (3) est en fonction,

e) à commuter la machine asynchrone sur sa deuxième vitesse de synchronisme $Vs_2$ entre ladite vitesse $V_4$ et une vitesse $V_5$, cette dernière étant supérieure ou sensiblement égale à la deuxième vitesse de synchronisme $Vs_2$, le frein (3) étant alors seul en fonction,

f) à commander simultanément, d'un part l'arrêt progressif de l'action du frein (3), et d'autre part la mise en fonction du coupleur (4) à partir de la vitesse $V_5$ et jusqu'à une vitesse $V_6$, supérieure à la vitesse V5, à partir de laquelle seul le coupleur (4) est en fonction, de sorte que la machine asynchrone (7) fonctionne en génératrice à la deuxième vitesse de synchronisme Vs2 et fournit de l'énergie au réseau,

g) à recommencer éventuellement les opérations à partir de d) pour d'autres vitesses supérieures de synchronisme,

h) à accomplir les opérations inverses au cours d'un décroissance de la vitesse du moteur (1).

6. Dispositif de récupération selon l'une des revendications 1, 2 et 4, caractérisé en ce que le coupleur (4) électromagnétique est un coupleur à courants de Foucault, commandé en faisant varier son courant d'excitation.

7. Dispositif de récupération selon l'une des revendications 1, 2, 4 et 6, caractérisé en ce que le frein (3) est un frein à courants de Foucault, commandé en faisant varier son courant d'excitation.

8. Dispositif de récupération selon l'une des revendications 1, 2, 4, 6 et 7, caractérisé en ce qu'un dispositif de contrôle de la puissance du réseau est prévu pour mesurer la puissance possible de récupération et agir en conséquence sur l'asservisseur (10) de l'ensemble frein-coupleur, de manière à laisser éventuellement en fonction, soit le frein (3) seul, soit le coupleur (4) et la génératrice, soit le frein (3) le coupleur (4) et la génératrice, selon la puissance possible à retourner au réseau.

9. Procédé de récupération selon l'une des revendications 3 et 5, muni d'un dispositif selon la revendication 8, caractérisé en ce qu'il consiste à laisser également le frein (3) en fonction en même temps que le coupleur (4), lorsque le réseau ne peut admettre une récupération maximale du dispositif et à interdire toute mise en fonction du coupleur (4) lorsqu'aucune puissance ne peut être récupérée.

## Patentansprüche

1. Anordnung zur Wiedergewinnung der Energie eines Motorprüfstandes in Form elektrischer Energie bestehend im wesentlichen aus einer mit dem Prüfmotor (1) gekuppelten Bremsvorrichtung, einer an das Versorgungsnetz (8) angeschlossenen elektrischen Asynchronmaschine (7), einem an der Welle des Motors (1) angeschlossenen Geschwindigkeitsmesser (2) und einem Kraftmomentgeber (12), dadurch gekennzeichnet, daß weiter ein elektromagnetisches geschwindigkeitsabhängiges Ankoppelglied (4) zum Herstellen einer Kupplungsverbindung zwischen Bremse (3) und Synchronmaschine (7) vorgesehen ist, während ein Regler (10) vorgesehen ist zur Aufnahme der Signale des Geschwindigkeitsmessers (2) und des Momentgebers (12), um Geschwindigkeit- und/oder Belastungssteuerung zu sichern sowie das Ein- und Ausschalten von Bremse und/oder des Ankoppelgliedes zu steuern.

2. Anordnung zur Wiedergewinnung nach Anspruch 1, dadurch gekennzeichnet, daß der Regler (10) zum gleichzeitigen Steuern bei vorgegebenen gewissen Geschwindigkeiten einerseits für ein stufenloses Anhalten der Tätigkeit der Bremse (3) bzw. des Ankoppelgliedes (4) und anderseits für ein stufenloses Inbetriebsetzen des Ankoppelgliedes (4) bzw. der Bremse (3) derart ausgelegt ist, daß vom Motor aus gesehen das Moment praktisch konstant bleibt.

3. Verfahren zur Wiedergewinnung der Energie während des Laufens eines Motors auf einem Prüfstand und mit einer Anordnung gem. Patentanspruch 2 versehen mit einer Asynchronmaschine (7) mit einer einzigen Synchrongeschwindigkeit Vs, gekennzeichnet, durch folgende Verfahrensschritte:

a) Belasten des Prüfmotors (1) über die Bremse (3) mit Hilfe des Reglers (10), wenn die vom Motor (1) angegebene Geschwindigkeit unterhalb der Synchrongeschwindigkeit Vs liegt,

b) Anlaufenlassen der Asynchronmaschine (7) sobald der Prüflauf beginnt oder mit Erreichen einer Geschwindigkeit $V_1$ geringfügig unterhalb der Synchrongeschwindigkeit Vs, wobei die Asynchronmaschine (7) dann als Motor arbeitet,

c) gleichzeitiges Steuern einerseits der stufenlosen Einstellung der Tätigkeit der Bremsen (3) und andererseits Inbetriebsetzen des Ankoppelgliedes (4) bei Erreichen der Synchrongeschwindigkeit Vs und bis zu einer Geschwindigkeit $V_2$ oberhalb der Synchrongeschwindigkeit Vs, von welcher an allein das Ankoppelglied (4) in Funktion ist, so daß nach Erreichen der Synchrongeschwindigkeit Vs die Synchronmaschine (7) im Generatorbetrieb arbeitet und die Energie in das Netz speist,

d) Durchführung der umgekehrten Arbeitsweise im Laufe einer Verringerung der Geschwindigkeit des Motors (1).

4. Anordnung zur Wiedergewinnung gem. einem der Ansprüche 1 und 2, dadurch gekennzeichnet, daß die Asynchronmaschine (7) mit mindestens zwei Synchrongeschwindigkeiten $Vs_1$ und $Vs_2$ ausgerüstet ist unter Verwendung einer Kommutatorsteuerung (9), welche zur Umsteuerung von der einen in die andere Geschwindigkeit und umgekehrt vorgesehen ist.

5. Verfahren zur Wiedergewinnung der Energie während des Laufens eines Motors auf einem Prüfstand und einer Anordnung gem. der Gesamtheit der Ansprüche 2 und 4, gekennzeichnet, durch folgende Verfahrensschritte:

a) Belasten des Prüfmotors (1) über die Bremse (3) mit Hilfe des Reglers (10), wenn die vom Motor (1) abgegebene Geschwindigkeit unterhalb der Synchrongeschwindigkeit $Vs_1$ liegt,

b) Anlaufenlassen der Asynchronmaschine (7) sobald der Prüflauf beginnt oder mit Erreichen einer Geschwindigkeit $V_1$ geringfügig unterhalb der Synchrongeschwindigkeit $Vs_1$,

wobei die Asynchronmaschine (7) dann als Motor arbeitet,

c) gleichzeitiges Steuern einerseits der stufenlosen Einstellung der Tätigkeit der Bremsen (3) und andererseits Inbetriebsetzen des Ankoppelgliedes (4) bei Erreichen der Synchrongeschwindigkeit $Vs_1$ und bis zu einer Geschwindigkeit $V_2$ oberhalb der Synchrongeschwindigkeit $Vs_1$, von welcher an allein das Ankoppelglied (4) in Funktion ist, so daß nach Erreichen der Synchrongeschwindigkeit $Vs_1$ die Synchronmaschine (7) im Generatorbetrieb arbeitet und die Energie in das Netz speist,

d) gleichzeitiges Steuern einerseits der stufenlosen Einstellung des Ankoppelgliedes (4) und Inbetriebsetzen der Bremse (3) von einer Geschwindigkeit $V_3$ unterhalb der zweiten Synchrongeschwindigkeit $Vs_2$ bis zu einer Geschwindigkeit $V_4$ unterhalb oder etwa gleich mit der zweiten Synchrongeschwindigkeit $Vs_2$, jedoch oberhalb der Geschwindigkeit $V_3$, wobei von da an allein die Bremse (3) gesteuert wird.

e) Umschalten der Asynchronmaschine auf die zweite Synchronmaschine $Vs_2$ zwischen der Geschwindigkeit $V_4$ und $V_5$, wobei diese letztere oberhalb oder im wesentlichen gleich mit der zweiten Synchrongeschwindigkeit ist, wobei die Bremse (3) allein in Funktion ist.

f) gleichzeitiges Umsteuern einerseits der stufenlosen Einstellung der Arbeit der Bremse und andererseits Inbetriebsetzen des Ankoppelgliedes (4) bei Erreichen der Geschwindigkeit $V_5$ und bis zu einer Geschwindigkeit $V_6$ oberhalb der Geschwindigkeit $V_5$, von welcher an allein das Ankoppelglied (4) derart in Funktion ist, daß die Asynchronmaschine (7) als Generator arbeitet mit der zweiten Synchrongeschwindigkeit $Vs_2$ und Energie ins Netz speist,

g) eventuelles Wiederholen der Verfahrensschritte d) für andere höhere Synchrongeschwindigkeiten und

h) Durchführung der umgekehrten Arbeitsweise im Laufe einer Verringerung der Geschwindigkeit des Motors (1).

6. Anordnung zur Wiedergewinnung gem. einem der Ansprüche 1, 2 und 4, dadurch gekennzeichnet, daß das elektromagnetische Ankoppelglied (4) eine Wirbelstromkupplung ist, die über ihren Erregerstrom gesteuert wird.

7. Anordnung zur Wiedergewinnung gem. einem der Ansprüche 1, 2, 4 und 6, dadurch gekennzeichnet, daß die Bremse (3) eine Wirbelstrombremse ist, die über ihren Erregerstroms gesteuert wird.

8. Anordnung zur Wiedergewinnung gem. einem der Ansprüche 1, 2, 4, 6 und 7, dadurch gekennzeichnet, daß eine Leistungsüberwachung des Netzes vorgesehen ist zum Messen der wiederzugewinnenden Leistung und zum entsprechenden Einwirken auf den Regler (10) der Einheit Bremse/Ankoppelglied, um ggf. die Bremse (3) allein oder das Ankoppelglied 4 und den Generator oder die Bremse 3, das Ankoppelglied 4 und den Generator gem. der möglichen Leistung zum Zurückspeisen in das Netz wirksam zu machen.

9. Verfahren zur Wiedergewinnung gem. einem der Ansprüche 3 und 5 bit einer Anordnung gem. dem Anspruch 8, dadurch gekennzeichnet, daß die Bremse (3) zur selben Zeit in Funktion belassen wird wie das Ankoppelglied (4), wenn in das Netz nicht die maximale wiedergewonnen Energie der Anordnung zurückgespeist werden kann und zum Unterdrücken der Wirksamkeit des Ankoppelgliedes (4), wenn keinerlie Energie zurückgespeist werden kann.

**Claims**

1. A device for recovering the energy of a motor test bed in electrical form comprising in particular a brake (3) coupled to the motor (1) being tested, an asynchronous electrical machine (7) connected to the power distribution system (8), a speed sensor (2) disposed at the output of the motor (1) and a torque sensor (12), characterised in that it comprises an electromagnetic variable-speed coupling device (4) serving to couple the brake (3) and the asynchronous machine (7) while a slave controller (10) is provided to receive the signals from the speed sensor (2) and torque sensor (12) in order to control the speed and/or torque and to control the engagement or disengagement of the brake and/or coupling device.

2. A recovery device as in Claim 1, characterised in that the slave controller (10) is arranged so that, at certain predetermined speeds, it simultaneously controls firstly the progressive disengagement of the brake (3) or the coupling device (4) respectively, and secondly the progressive engagement of the coupling device (4) or the brake (3) respectively, all this in such a way that the torque from the motor (1) remains practically constant.

3. A method for recovering the energy of a motor test bed during testing by means of a device as in Claim 2 fitted with an asynchronous machine (7) with a single synchronisation speed Vs, characterised in that it consists in:

a) loading the motor (1) being tested solely with the brake (3) by means of the slave controller (10) when the output speed of said motor (1) is less than the synchronisation speed Vs;

b) starting the asynchronous machine (7) as soon as the test begins or at a speed V1 slightly less than the synchronisation speed Vs, the asynchronous machine (7) then operating as a motor;

c) simultaneously controlling firstly the progressive disengagement of the brake (3) and secondly the engagement of the coupling device (4) from the synchronisation speed Vs up to a speed V2 greater than the synchronisation speed Vs and from which the coupling device (4) alone is in operation, such that the asynchronous machine (7) operates as a generator and supplies energy to the system from the synchronisation speed Vs onwards;

d) carrying out the reverse operations while the speed of the motor (1) is decreasing.

4. A recovery device as in one of Claims 1 and 2, characterised in that the asynchronous machine (7) has at least 2 synchronisation speeds Vs1 and Vs2, a switch (9) being provided to pass from one to the other.

5. A method for recovering the energy of a motor test bed during testing by means of a device as in Claims 2 and 4 together, characterised in that it consists in:

a) loading the motor (1) being tested solely with the brake (3) by means of the slave controller (10) when the output speed of said motor is less than the first synchronisation speed Vs1;

b) starting the asynchronous machine (7) connected with its first synchronisation speed Vs1 as soon as the test begins or at the speed V1 slightly less than the first synchronisation speed Vs1, the asynchronous machine (7) then operating as a motor;

c) simultaneously controlling firstly the progressive disengagement of the brake (3) and secondly the engagement of the coupling device (4) from the first synchronisation speed Vs1 up to a speed V2 greater than the first synchronisation speed Vs1 and from which the coupling device alone is in operation, such that the asynchronous machine (7) operates as a generator and supplies energy to the system from the first synchronisation speed Vs1 onwards;

d) simultaneously controlling firstly the progressive disengagement of the coupling device (4) and secondly the engagement of the brake (3) from a motor speed V3 less than the second synchronisation speed Vs2 up to a speed V4 less than or substantially equal to the second synchronisation speed Vs2 but greater than the speed V3 and from which the brake (3) alone is in operation;

e) switching the asynchronous machine to its second synchronisation speed Vs2 between said speed V4 and a speed V5, the latter being greater than or substantially equal to the second synchronisation speed Vs2, the brake (3) alone then being in operation;

f) simultaneously controlling firstly the progressive disengagement of the brake (3) and secondly the engagement of the coupling device (4) from the speed V5 up to a speed V6 greater than speed V5 and from which the coupling device (4) alone is in operation, such that the asynchronous machine (7) operates as a generator at the second synchronisation speed Vs2 and supplies energy to the system;

g) possibly recommencing the operations from d) for other greater synchronisation speeds;

h) accomplishing the reverse operations while the speed of the motor (1) is decreasing.

6. A recovery device as in one of Claims 1, 2 and 4, characterised in that the electro-

**0 056 914**

magnetic coupling device (4) is an eddy-current coupling device operated by varying its excitation current.

7. A recovery device as in one of Claims 1, 2, 4 and 6, characterised in that the brake (3) is an eddy-current brake operated by varying its excitation current.

8. A recovery device as in one of Claims 1, 2, 4, 6 and 7, characterised in that a system power monitoring device is provided to measure the power recovery possible and act accordingly on the slave controller (10) of the brake and coupling device assembly so as to leave operating as appropriate either the brake (3) alone or the coupling device (4) and the generator or the brake (3), the coupling device (4) and the generator, according to the power that can be returned to the system.

9. A recovery method as in one of Claims 3 and 5, with a device as in Claim 8, characterised in that it consists in also leaving the brake (3) in operation at the same time as the coupling device (4) when the system cannot take the maximum that can be recovered by the device, and in preventing engagement of the coupling device (4) when no power can be recovered.

Fig.1

Fig. 2

## Fig.3

COUPLE

Vs VITESSE DE SYNCHRONISME
DE LA GÉNÉRATRICE

C MAX
GÉNÉ.

~0,95 Vs          ~1,05 Vs          VITESSE

C MAX
MOTEUR

FONCTIONNEMENT
EN MOTEUR

FONCTIONNEMENT
EN GÉNÉRATRICE